# EUROPEAN PATENT APPLICATION

(11) **EP 4 060 794 A1**
(43) Date of publication of application: **21.09.2022**
(21) Application number: 20890804.6
(22) Date of filing: 19.10.2020
(51) Int. Cl.: H01M 50/10, H01M 50/242

(54) **BATTERY PACK AND ELECTRIC VEHICLE**

(30) Priority: 18.11.2019 CN 201911128539
(71) Applicant: BYD Company Limited, Shenzhen, Guangdong 518118 (CN)
(72) Inventor: HE, Long, Shenzhen, Guangdong 518118 (CN); SUN, Huajun, Shenzhen, Guangdong 518118 (CN); ZHU, Yan, Shenzhen, Guangdong 518118 (CN); TAN, Liangwen, Shenzhen, Guangdong 518118 (CN); WAN, Long, Shenzhen, Guangdong 518118 (CN)
(74) Representative: Hoffmann Eitle
(86) International application number: PCT/CN2020/121840
(87) International publication number: WO 2021/098428

(57) **Abstract**

A battery pack and an electric vehicle are provided. The battery pack includes a casing and a battery assembly arranged inside the casing. The battery assembly includes a battery unit and a reinforcing member. The battery unit includes N cells. At least some of the cells in the battery unit are connected by M reinforcing members. An outer surface of each of the cells includes a bottom surface, a top surface, and side surfaces. The bottom surface of the cell faces a bottom surface of the casing. The side surfaces include a first side surface and two opposite second side surfaces. The first side surface has a largest area among the side surfaces. An area of the first side surface is greater than an area of the bottom surface and the area of the first side surface is greater than an area of the top surface. The N cells are arranged in sequence. The second side surfaces of two adjacent cells are arranged opposite to each other. The reinforcing member is fixedly bonded to the first side surface of each cell in Q adjacent cells. N>Q≥2.

## Description

### CROSS-REFERENCE TO RELATED APPLICATION

The present disclosure claims priority to Chinese Patent Application No. "201911128539.4" entitled "Battery pack and electric vehicle" filed by BYD Company Limited on November 18, 2019. The entire content of the above-referenced application is incorporated herein by reference.

### FIELD

The present disclosure relates to the technical field of batteries, and specifically to a battery pack and an electric vehicle.

### BACKGROUND

Power battery packs currently applied to electric vehicles mainly include a battery pack casing and a number of battery modules mounted in the battery pack casing. The battery module includes a battery array including a number of batteries arranged in sequence, side plates arranged at both sides of the battery array and end plates arranged at both ends of the battery array. The side plate and the end plate are connected by screws or pull rods, or by welding, to fix the battery array. After the battery module is assembled, it is mounted in the battery pack casing by fasteners such as screws. Moreover, to improve the strength of the battery pack, reinforcing beams need to be arranged in the battery pack. The presence of the end plates, the side plates, the reinforcing beams, the fasteners, and other structural members causes the entire battery pack to have a large weight, and reduces the space utilization inside the battery pack, making the energy density fail to meet the user's requirements on the battery life of electric vehicles. Moreover, such a structure also has the problems of cumbersome assembly process and complicated assembly procedures. The batteries need to be assembled into a battery module first, and then the battery module is mounted in the battery pack casing, which in turn causes the increase in labor, material, and other costs.

To solve the above problems, the Patent with the No. of CN201822274851.1 provides a battery module, which includes a first battery module, a second battery module and a liquid cooling plate. The first battery module and the second battery module both include a number of cells arranged in a horizontal direction, and each of the cells in the battery module is laid flat (that is, two opposite large surfaces of the cell are arranged in a vertical direction). The liquid cooling plate is vertically arranged between the first battery module and the second battery module, and two side surfaces of the liquid cooling plate are respectively bonded to the first battery module and the second battery module by a thermally conductive adhesive. Although structural members for mounting and fixing the cells are omitted in the battery module and the assembly process is simplified, the overall structural strength of such a battery module is low. Moreover, to ensure the cooling effect of the liquid cooling plate, an accommodating cavity for accommodating a coolant is provided inside the liquid cooling plate, and the accommodating cavity needs to have a certain thickness. However, the liquid cooling plate of this structure has low strength and cannot withstand a too high structural force, to avoid the short circuit of the cells caused by leakage of the coolant due to the damage of the liquid cooling plate. Therefore, the liquid cooling plate cannot strengthen and support the battery module.

### SUMMARY

The present disclosure aims to provide a battery pack having simple structure, convenient assembly, high structural strength, high space utilization and energy density, and an electric vehicle.

To solve the above technical problems, in an aspect, an embodiment of the present disclosure provides a battery pack, which includes:

a casing and a battery assembly arranged inside the casing. The casing has an bottom surface and a top surface.

The battery assembly includes a battery unit and a reinforcing member. The battery unit includes N cells, where the N is an integer greater than 2. M reinforcing members are provided, where the M is an integer greater than 1. At least some of the cells in the battery unit are connected by the M reinforcing members. One of the reinforcing members is fixedly bonded to a first side surface of at least some cells in Q adjacent cells, where the Q is an integer meeting N>Q≥2.

An outer surface of each of the cells includes a bottom surface, a top surface, and side surfaces. The bottom surface of the cell faces the bottom surface of the casing, and the top surface of the cell faces the top surface of the casing. The side surfaces include the first side surface and two opposite second side surfaces. Among the side surfaces, the first side surface has a largest area. An area of the first side surface is greater than an area of the bottom surface of the cell and the area of the first side surface is greater than an area of the top surface of the cell. The N cells are arranged in sequence, the second side surfaces of two adjacent cells are arranged opposite to each other, and the arrangement direction of the cells is a first direction.

Optionally, the dimension of the reinforcing member along a second direction perpendicular to the first direction is D0, and the dimension along the second direction of at least one cell connected to the reinforcing member among the Q adjacent cells is D1, where a ratio between D0 and D1 meets: 0.006≤D0/D1≤0.5, and D1 ranges from 10 to 90 mm.

Optionally, 0.012≤D0/D1≤0.4.

Optionally, a number of cells connected to the reinforcing member among the Q adjacent cells is not less than Q/2.

Optionally, the N cells are connected into a battery unit by the M reinforcing members; and one of the reinforcing members is fixedly bonded to the first side surface of each of the cells in the Q adjacent cells.

Optionally, a length of the battery assembly along the first direction is 400-2500 mm, and the battery assembly abuts against the bottom surface of the casing to be supported on the bottom surface of the casing.

Optionally, an S is defined as a projecting length of the reinforcing member bonded to the first side surface of at least one of the cells onto the first side surface of the cells in the first direction, and P is defined as a cell length in the first direction; and the S and the P meet: S=0.1P-0.5P.

Optionally, the M reinforcing members are arranged at one side of the battery assembly, and the M reinforcing members are arranged in sequence along a preset direction. A first reinforcing member is fixedly bonded to the first side surface of each cell in a first to a Qth cell, a second reinforcing member is fixedly bonded to the first side surface of each cell in the Qth to a (2Q-1)th cell, a third reinforcing member is fixedly bonded to the first side surface of each cell in the (2Q-1)th to a (3Q-2)th cell, and an Mth reinforcing member is fixedly bonded to the first side surface of each cell in a [M x Q-(M-1)-(Q-1)]th to a [M x Q-(M-1)]th cell.

Optionally, one of the reinforcing members is fixedly bonded to the first side surface of the two adjacent cells.

Optionally, the side surfaces include two opposite first side surfaces, and the M reinforcing members are distributed at two sides of the battery assembly. The reinforcing member arranged at one side of the battery assembly is fixedly bonded to one first side surface of each cell in Q adjacent cells, and the reinforcing members arranged at the other side of the battery assembly is fixedly bonded to the other first side surface of each cell in Q adjacent cells.

Optionally, the reinforcing member arranged at one side of the battery assembly is fixedly bonded to at least part of one first side surface of each cell in Q adjacent cells, and the reinforcing member arranged at the other side of the battery assembly is fixedly bonded to at least part of the other first side surface of each cell in Q adjacent cells.

Optionally, the reinforcing members arranged at both sides of the battery assembly are arranged in sequence along a preset direction. A first reinforcing member arranged at one side of the battery assembly is fixedly bonded to one first side surface of each cell in a first to a Qth cell, a second reinforcing member is fixedly bonded to the one first side surface of each cell in the Qth to a (2Q-1)th cell, and an Mth reinforcing member is fixedly bonded to the one first side surface of each cell in a [M x Q-(M-1)-(Q-1)]th to a [M x Q-(M-1)]th cell.

A first reinforcing member arranged at the other side of the battery assembly is fixedly bonded to the other first side surface of each cell in the first to the Qth cell, a second reinforcing member is fixedly bonded to the other first side surface of each cell in the Qth to the (2Q-1)th cell, and an Mth reinforcing member is fixedly bonded to the other first side surface of each cell in the [M x Q-(M-1)-(Q-1)]th to the [M x Q-(M-1)]th cell.

Optionally, the reinforcing members arranged at both sides of the battery assembly are arranged in sequence along a preset direction. A first reinforcing member arranged at one side of the battery assembly is fixedly bonded to one first side surface of each cell in a first to a Qth cell, a first reinforcing member arranged at the other side of the battery assembly is fixedly bonded to the other first side surface of each cell in the Q to a (2Q-1)th cell, a second reinforcing member arranged at the one side of the battery assembly is fixedly bonded to the one first side surface of each cell in the (2Q-1) to a (3Q-2)th cell, a second reinforcing member arranged at the other side of the battery assembly is fixedly bonded to the other first side surface of each cell in the (3Q-2)th to a (4Q-3)th cell, an Mth reinforcing member arranged at the one side of the battery assembly is fixedly bonded to the one first side surface of each cell in a [2 × M × Q-(2M-1)-2(Q-1)] th to a [2 × M × Q-(2M-1)-(Q-1)]th cell, and an Mth reinforcing member arranged at the other side of the battery assembly is fixedly bonded to the other first side surface of each cell in the [2 × M × Q-(2M-1)-(Q-1)]th to a [2 × M × Q-(2M-1)]th cell.

Optionally, the reinforcing members arranged at both sides of the battery assembly are arranged in sequence along a preset direction. A first reinforcing member arranged at one side of the battery assembly is fixedly bonded to one first side surface of each cell in a first to a Qth cell, a second reinforcing member is fixedly bonded to the one first side surface of each cell in a (Q-1)th to a (2Q)th cell, and an Mth reinforcing member is fixedly bonded to the one first side surface of each cell in a [MxQ-(Q-1)]th to a (MxQ)th cell.

A first reinforcing member arranged at the other side of the battery assembly is fixedly bonded to the other first side surface of each cell in a second to a (Q+1)th cell, a second reinforcing member is fixedly bonded to the other first side surface of each cell in a (Q+2)th to a (2Q+1)th cell, and an Mth reinforcing member is fixedly bonded to the other first side surface of each cell in a [MxQ-(Q-1)+1]th to a [MxQ+1)]th cell.

Optionally, one end of the reinforcing member is provided with an extension attached to the top surface or bottom surface of each of the cells.

Optionally, two opposite ends of the reinforcing member are each provided with an extension, one of the extensions is attached to the top surface of at least one cell, and the other of the extensions is attached to the bottom surface of at least one cell.

Optionally, the casing has an X direction, a Y direction and a Z direction perpendicular to one another. A number of battery assemblies are provided, and the number of battery assemblies are arranged in the casing along the X direction. The N cells are arranged in sequence along the Y direction, the top surface and the bottom surface of the cells are arranged opposite to each other in the Z direction, and the first direction is parallel to the Y direction.

Optionally, the cell is roughly a cuboid, having a length L, a width H and a thickness D. The length L of the cell is greater than or equal to the width H, and the width H of the cell is greater than the thickness D. The X direction is defined as a thickness direction of the cell, the Y direction is defined as one of a length direction or a width direction of the cell, and the Z direction is defined as the other of the length direction and the width direction of the cell.

Optionally, the cell includes six surfaces, including a bottom surface, a top surface, two first side surfaces and two second side surfaces, where the two first side surfaces are arranged opposite in the thickness direction, the two second side surfaces are arranged opposite in the length direction, and the bottom surface and the top surface are arranged opposite in the width direction.

Optionally, the casing includes a first side frame and a second side frame arranged opposite to each other along the Y direction, where the battery assembly is provided between the first side frame and the second side frame, one end of the battery assembly is supported by the first side frame, and the other end of the battery assembly is supported by the second side frame.

Optionally, the reinforcing member is fixedly bonded by a structure adhesive to the first side surface of each cell in Q adjacent cells.

Optionally, the structural adhesive is a thermally conductive structural adhesive.

Optionally, the reinforcing member is a reinforcing plate.

Optionally, the reinforcing plate is a steel plate, an aluminum plate or a glass fiber plate.

Optionally, a number of battery assemblies are provided, and a gap is provided between two adjacent battery assemblies.

Optionally, the second side surfaces of two adjacent cells in the battery unit are attached to each other.

Optionally, a number of battery assemblies are provided, and a reinforcing member is provided between at least two adjacent battery assemblies.

Optionally, the reinforcing member is fixedly bonded to the battery assemblies arranged at both sides of the reinforcing member.

Optionally, the reinforcing member is an aluminum plate or a steel plate.

Optionally, the casing includes a tray and an upper cover. An accommodating space where the battery assemblies are arranged is defined by the tray and the upper cover. The top surfaces of the cells in the battery assembly are fixedly bonded to an inner surface of the upper cover, and the bottom surfaces of the cells are fixedly bonded to an inner surface of the tray.

Optionally, the tray and/or the upper cover are/is of a multi-layer composite structure.

Optionally, the multi-layer composite structure includes two layers of aluminum plates, and a steel plate or a foamed aluminum plate sandwiched between the two layers of aluminum plates.

Optionally, the multi-layer composite structure includes two fiber composite layers, and a foamed material layer sandwiched between the two fiber composite layers.

Optionally, the fiber composite layer includes a glass fiber layer and/or a carbon fiber layer.

Optionally, a number of battery assemblies are provided, and the second side surfaces of two adjacent cells in one battery assembly are attached to each other at a position designated as a first position, and the second side surfaces of two adjacent cells in another adjacent battery assembly are attached to each other at a position designated as a second position, where the first position and the second position are arranged at an interval along the first direction.

Optionally, a number of battery assemblies are provided, two adjacent cells in one battery assembly are set at a first interval, and two adjacent cells in another adjacent battery assembly are set at a second interval, where the projection of the first interval in the first direction does not overlap with the projection of the second interval in the first direction.

Optionally, a number of cells varies in two adjacent battery assemblies. One of the battery assemblies is designated as a first battery assembly, and the other battery assembly is designated as a second battery assembly. A number of cells in the first battery assembly is greater than a number of cells in the second battery assembly. A reinforcing block is provided in the second battery assembly, and the reinforcing block is connected to the cells in the second battery assembly.

In another aspect, an embodiment of the present disclosure also provides an electric vehicle, including the battery pack.

In the battery pack and electric vehicle according to the embodiments of the present disclosure, the reinforcing member is fixedly bonded to the first side surface of at least some cells in Q adjacent cells, so at least some of the cells in the battery assembly can be connected into one piece by M reinforcing members. Among the side surfaces, top surface and bottom surface of the cell, the first side surface has a relatively large area (that is, the first side surface is a surface with a larger area). This ensures the bonding area between the reinforcing member and the cell, and ensures the bonding strength therebetween. In related art, the cell is laid with the large surface facing the top surface and bottom surface of the casing, that is, the cell is laid horizontally. The cells are arranged in sequence along the horizontal direction to form a battery module. When the battery module receives a vertical force, the vertical force easily causes the battery assembly to deform in the vertical direction. Accordingly, the bottom of the casing needs to be thickened or a reinforcing rib needs to be provided at the bottom of the casing to ensure that the casing has a certain structural strength. However, this will reduce the gravimetric or volumetric energy density of the battery pack. In the present disclosure, the top surface of the cell faces the top surface of the casing, and the bottom surface of the cell faces the bottom surface of the casing. That is, the cell is laid vertically in the casing, and the reinforcing member is also laid vertically. When the battery assembly receives a vertical force, the vertical force easily causes the battery assembly to deform in the horizontal direction, but the peripheral walls of the casing can limit the occurrence of this deformation. Moreover, at least some of the cells in the battery assembly can be connected into one piece by the reinforcing members, and the overall strength of the battery assembly can be improved by the reinforcement and support of the reinforcing members. The battery assembly can serve as a reinforcing beam in the casing, so there is no need to provide additional reinforcing beams (the thickness of the reinforcing beams provided in the casing in related art is at least ten more millimeters), thus greatly simplifying the structure of the casing, and improving the space utilization of the battery pack. Furthermore, the reinforcing member in the present disclosure has a relatively small thickness while ensuring that the battery assembly has sufficient strength, thereby reducing the weight of the battery pack, and improving the energy density of the battery pack. Moreover, the battery assemblies are directly arranged and aligned in the casing, and such a structure design omits the structural members for mounting and fixing the cells, which not only reduces the weight of the entire battery pack, but also simplifies the assembly process, thus reducing the production cost.

### BRIEF DESCRIPTION OF THE DRAWINGS

FIG. 1 is a schematic structural view of a battery pack according to an embodiment of the present disclosure;
FIG. 2 is a schematic structural view of a battery assembly according to an embodiment of the present disclosure;
FIG. 3 is an exploded view of FIG. 2;
FIG. 4 is a top view of FIG. 2;
FIG. 5 is a top view of a battery assembly according to an embodiment of the present disclosure;
FIG. 6 is an exploded view of FIG. 5;
FIG. 7 is a schematic structural view of a battery assembly according to an embodiment of the present disclosure;
FIG. 8 is a top view of a battery assembly according to an embodiment of the present disclosure;
FIG. 9 is a top view of a battery assembly according to an embodiment of the present disclosure;
FIG. 10 is a top view of a battery assembly according to an embodiment of the present disclosure;
FIG. 11 is a top view of a battery assembly according to an embodiment of the present disclosure;
FIG. 12 is a top view of a battery assembly according to an embodiment of the present disclosure;
FIG. 13 is a top view of a battery assembly according to an embodiment of the present disclosure;
FIG. 14 is a schematic structural view of a reinforcing member according to an embodiment of the present disclosure;
FIG. 15 is a schematic structural view of a reinforcing member according to an embodiment of the present disclosure;
FIG. 16 is a schematic structural view of a cell according to an embodiment of the present disclosure;
FIG. 17 is a schematic structural view of a casing according to an embodiment of the present disclosure;
FIG. 18 is a schematic structural view of a battery assembly according to an embodiment of the present disclosure; and
FIG. 19 is another schematic structural view of a battery pack according to an embodiment of the present disclosure.

The reference numerals in the specification are as follow.
10. battery pack;
100. casing; 101. tray; 102. first side frame; 103. second side frame; 104. third side frame; 105. fourth side frame;
200. battery assembly; 201. battery unit; 202. cell; 203. first side surface; 204. second side surface; 205. top surface; 206. bottom surface; 207. electrode terminal;
300. reinforcing member;
400. extension
500. structural adhesive;
600. power connector;
700. reinforcing block.

### DETAILED DESCRIPTION

Embodiments of the present disclosure are described in detail in the following. Examples of the embodiments are shown in the accompanying drawings. In the accompanying drawings, the same or similar elements and elements having same or similar functions are denoted by same or similar reference numerals throughout. The embodiments described below with reference to the accompanying drawings are exemplary, and are intended to interpret the present disclosure and are not to be construed as a limitation to the present disclosure.

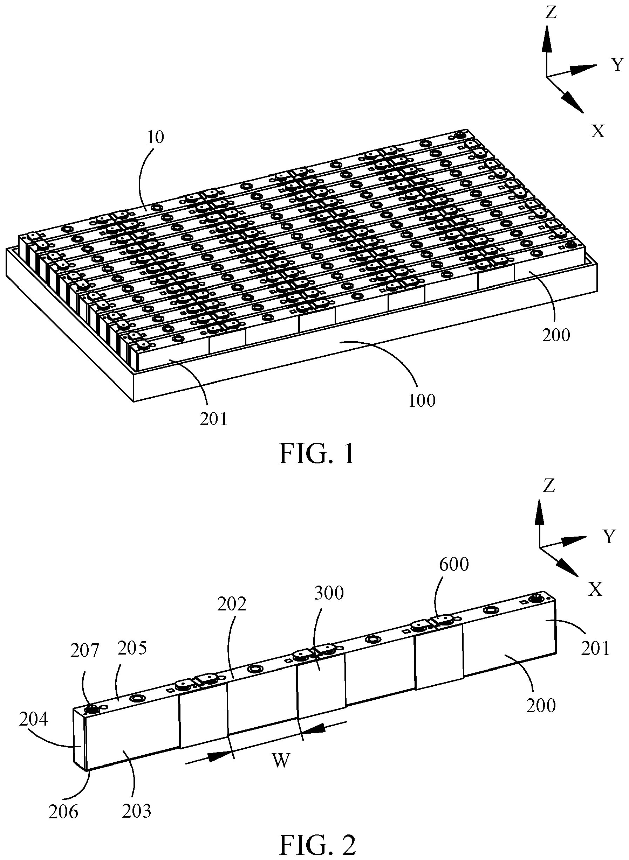

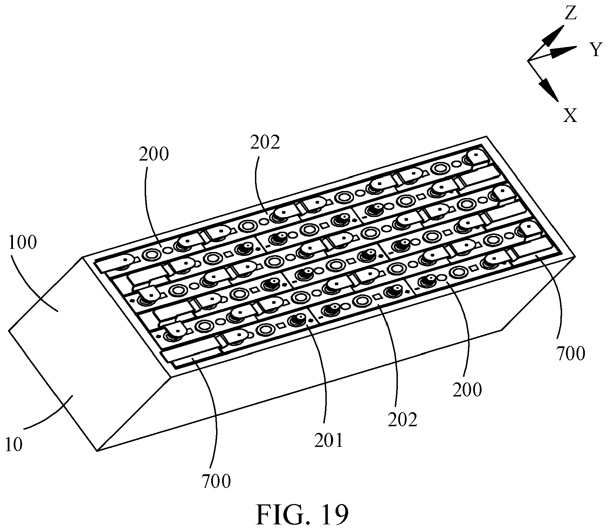

As shown in FIG. 1 to FIG. 19, an embodiment of the present disclosure provides a battery pack 10, which includes a casing 100 and a battery assembly 200 arranged inside the casing 100. The casing 100 has a bottom surface and a top surface. The battery assembly 200 includes a battery unit 201 and a reinforcing member 300. The battery unit 201 includes N cells 202, where the N is an integer greater than 2. M reinforcing member 300 are provided, where the M is an integer greater than 1. At least some of the cells 202 in the battery unit 201 are connected by the M reinforcing members 300. The cell 202 has an outer surface including a bottom surface 206, a top surface 205, and side surfaces. The bottom surface 206 of the cell 202 faces the bottom surface of the casing 100, and the top surface 205 of the cell 202 faces the top surface of the casing 100. The side surfaces include a first side surface 203 and two opposite second side surfaces 204. The first side surface 203 has the largest area among the side surfaces. The area of the first side surface 203 is greater than the area of the bottom surface 206 of the cell 202 and the area of the first side surface 203 is greater than the area of the top surface 205 of the cell 202. The N cells 202 are arranged in sequence, where the second side surfaces 204 of two adjacent cells 202 are arranged opposite to each other, and the arrangement direction of the cells 202 is a first direction. One of the reinforcing member 300 is fixedly bonded to the first side surface 203 of at least some cells 202 in Q adjacent cells 202, where the Q is an integer meeting N>Q≥2.

For example, one of the reinforcing members 300 is fixedly bonded to the first side surface 203 of one cell 202 in three adjacent cells 202, and the first side surface 203 of the other two cells 202 is not bonded to the reinforcing member 300. Alternatively, one of the reinforcing members 300 is fixedly bonded to the first side surface 203 of two cells 202 in three adjacent cells 202, and the first side surface 203 of the other one cell 202 is not bonded to the reinforcing member 300.

For example, one of the reinforcing members 300 is fixedly bonded to the first side surface 203 of one cell 202 in four adjacent cells 202, and the first side surface 203 of the other three cells 202 is not bonded to the reinforcing member 300. Alternatively, one of the reinforcing members 300 is fixedly bonded to the first side surface 203 of two cells 202 in four adjacent cells 202, and the first side surface 203 of the other two cells 202 is not bonded to the reinforcing member 300.

It should be noted that the shape, size and structure of the two opposite second side surfaces 204 of the cell 202 may be the same or different. Moreover, the first side surface 203 can be the whole surface of the first side surface 203, or a part of the first side surface 203. According to the battery pack 10 provided in the embodiments of the present disclosure, the reinforcing member 300 is fixedly bonded to the first side surface 203 of at least some cells 202 in the Q adjacent cells 202. At least some of the cells 202 in the battery assembly 200 can be connected into one piece by the M reinforcing members 300. Among the side surfaces, top surface and bottom surface of the cell 202, the first side surface 203 has a relative large area (that is, the first side surface 203 is a surface with a larger area). This ensures the bonding area between the reinforcing member 300 and the cell 202, and ensures the bonding strength therebetween. In the related arts, the cell 202 is laid with the large surface facing the top surface and bottom surface of the casing, that is, the cell is laid horizontally. The cells 202 are arranged in sequence along the horizontal direction to form a battery module. When the battery module receives a vertical force, the vertical force easily causes the battery assembly 200 to deform in the vertical direction. Accordingly, the bottom of the casing needs to be thickened or a reinforcing rib needs to be provided at the bottom of the casing to ensure that the casing has a certain structural strength. However, the gravimetric or volumetric energy density of the battery pack 10 will be reduced with the arrangement. In the present disclosure, the top surface of the cell 202 faces the top surface of the casing, and the bottom surface of the cell 202 faces the bottom surface of the casing. That is, the cell 202 is laid vertically in the casing, and the reinforcing member is also laid vertically. When the battery assembly 200 receives a vertical force, the vertical force easily causes the battery assembly 200 to deform in the horizontal direction, but the peripheral walls of the casing can limit the occurrence of this deformation. Moreover, at least some of the cells 202 in the battery assembly 200 can be connected into one piece by the reinforcing members, and the overall strength of the battery assembly 200 can be improved by the reinforcement and support of the reinforcing members. The battery assembly 200 can serve as a reinforcing beam in the casing, so there is no need to provide additional reinforcing beams (the thickness of the reinforcing beams provided in the casing in related art is at least ten more millimeters), thus greatly simplifying the structure of the casing, and improving the space utilization of the battery pack 10. Moreover, the reinforcing member in the present disclosure has a relative small thickness of merely several millimeters while ensuring that the battery assembly 200 has sufficient strength, thereby reducing the weight of the battery pack 10, and improving the energy density of the battery pack 10. Moreover, the battery assemblies 200 are directly arranged and aligned in the casing, and such a structure design omits the structural members for mounting and fixing the cells 202, which not only reduces the weight of the entire battery pack 10, but also simplifies the assembly process, thus reducing the production cost.

It should be noted that herein, the casing 100 of the battery pack 10 can be understood as a casing for accommodating the battery assembly 200, and including a tray 101 and an upper cover (not shown). An accommodating space for accommodating the battery assembly 200 is defined by the tray 101 and the upper cover. For example, the tray and the upper cover are tightly connected to form an accommodation space. The battery assembly 200 is provided on the tray 101, and covered by the upper cover. The number of battery assemblies 200 in the casing 100 can be set according to actual needs, for example, two or three. The battery pack 10 also includes at least one of a battery management system (BMS), a battery connector, a battery sampler and a battery thermal management system.

In an embodiment, the reinforcing member 300 has a dimension D0 in a second direction perpendicular to the first direction, and the weight of one of the cells 202 fixedly bonded with the reinforcing member 300 is G. The D0 and G meet: 0.15 mm·kg-1<D0/G<7 mm·kg-1, and D0=0.5-5 mm. Such a setting can not only ensure that the battery assembly 200 has sufficient strength, and also reduce the thickness of the reinforcing member 300, thereby reducing the weight of the battery pack 10, and improving the energy density of the battery pack 10.

Further, 0.25 mm·kg-1≤D0/G≤5.8 mm·kg-1. Such a setting can further improve the strength of the battery assembly, and also reduce the thickness of the reinforcing member 300, thereby reducing the weight of the battery pack 10, and improving the energy density of the battery pack 10.

In an embodiment, the reinforcing member has a dimension D0 in a second direction perpendicular to the first direction, and one of the cells 202 connected to the reinforcing member 300 among the Q adjacent cells 202 has a dimension D1 in the second direction, where a ratio between D0 and D1 meets: 0.006≤D0/D1≤0.5, and D1 ranges from 10 to 90 mm. In this way, the thickness of the cell 202 can be prevented from being excessively large, and the cell 202 and the reinforcing member 300 can be bonded with each other with greater strength.

Further, 0.012≤D0/D1≤0.4, In this way, the thickness of the cell 202 can be prevented from being excessively large, and the cell 202 and the reinforcing member 300 can be bonded with each other with greater strength.

In an embodiment, the number of cells 202 connected to the reinforcing member 300 among the Q adjacent cells 202 is not less than Q/2. For example, the number of cells 202 connected to the reinforcing member 300 among three adjacent cells 202 is two or three. The number of cells 202 connected to the reinforcing member 300 among four adjacent cells 202 is two, three or four.

In an embodiment, the N cells 202 are connected into a battery unit 201 by the M reinforcing members 300. One of the reinforcing members 300 is fixedly bonded to the first side surface 203 of each cell 202 in Q adjacent cells 202.

One of the reinforcing members 300 is fixedly bonded to the first side surface 203 of each cell 202 in Q adjacent cells 202, and so the N cells 202 in the battery unit 201 can be connected into one piece by the M reinforcing members 300, to further improve the overall strength of the battery assembly 200. The battery assembly 200 can serve as a reinforcing beam in the casing 100, thus greatly simplifying the structure of the casing 100, reducing the space occupied by the reinforcing rib, and improving the space utilization of the battery pack 10 and the energy density of the battery pack 10. Moreover, the battery assemblies 200 are directly arranged and aligned in the casing 100, and such a structure design omits the structural members for mounting and fixing the cells 202, which not only reduces the weight of the entire battery pack 10, but also simplifies the assembly process, thus reducing the production cost.

In an embodiment, a length of the battery assembly 200 along the first direction is 400-2500 mm, and the battery assembly 200 abuts against the bottom surface of the casing 100 to be supported on the bottom surface of the casing 100.

The cells 202 in the battery assembly 200 can be connected into one piece by the reinforcing members 300, and the overall strength of the battery assembly 200 can be improved by the reinforcement and support of the reinforcing members 300. The battery assembly 200 can serve as a reinforcing beam in the casing 100, thus greatly simplifying the structure of the casing 100, reducing the space occupied by the reinforcing rib, and improving the space utilization of the battery pack 10 and the energy density of the battery pack 10. Moreover, the battery assemblies 200 are directly arranged and aligned in the casing 100, and such a structure design omits the structural members for mounting and fixing the cells 202, which not only reduces the weight of the entire battery pack 10, but also simplifies the assembly process, thus reducing the production cost.

Further, a length of the battery assembly 200 along the first direction is 600-2500 mm, to meet the requirements during use.

In an embodiment, the battery unit 201 includes four cells 202. Certainly, the number of cells 202 included in the battery unit 201 can be set according to actual needs, for example, three, five or more.

In an embodiment, as shown in FIG. 2, one of the reinforcing members 300 is fixedly bonded to the first side surface 203 of each cell 202 in two adjacent cells 202.

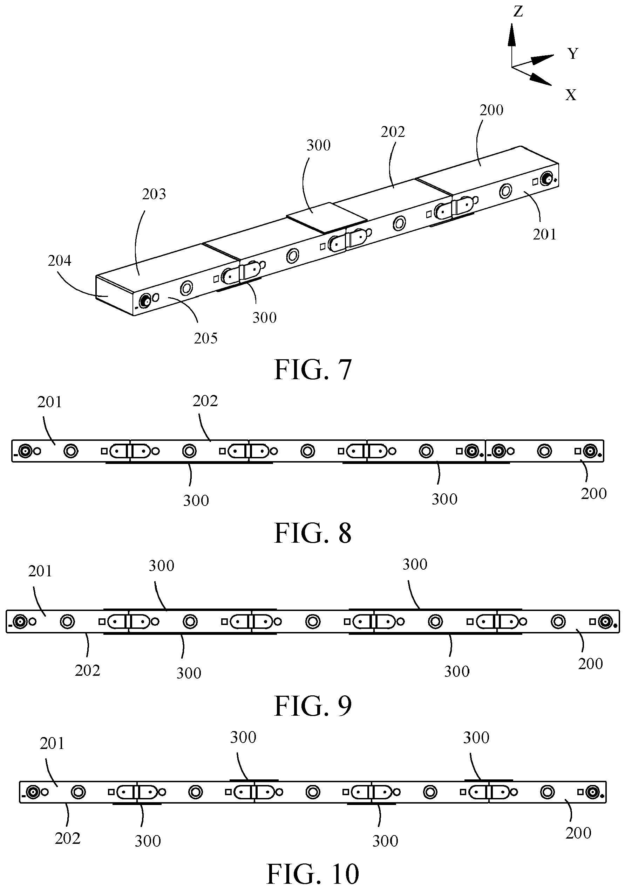

In another embodiment, as shown in FIG. 8, one of the reinforcing members 300 is fixedly bonded to the first side surface 203 of each cell 202 in three adjacent cells 202.

In an embodiment, the reinforcing member 300 is fixedly bonded to at least part of the first side surface 203 of each cell 202 in Q adjacent cells 202.

As shown in FIG. 2, the reinforcing member 300 is fixedly bonded to at least part of the first side surface 203 of each cell 202 in two adjacent cells 202. Moreover, part of the first side surface 203 of two adjacent cells 202 is fixedly bonded with the reinforcing member 300. Certainly, the reinforcing member 300 may also be fixedly bonded to the whole first side surface 203 of one cell 202, and at least part of the first side surface 203 of the other cell 202.

However, in another embodiment, as shown in FIG. 8, the reinforcing member 300 is fixedly bonded to at least part of the first side surface 203 of each cell 202 in three adjacent cells 202. Moreover, part of the first side surface 203 of two cells 202 in three adjacent cells 202 and the whole first side surface 203 of the other one cell 202 are fixedly bonded with the reinforcing member 300. Certainly, part of the first side surface 203 of the three adjacent cells 202 may also be fixedly bonded with the reinforcing member 300.

In an embodiment, as shown in FIG. 2 and FIG. 8, the M reinforcing members 300 are arranged at one side of the battery assembly 200, and the M reinforcing members 300 are arranged in sequence along a preset direction. A first reinforcing member 300 is fixedly bonded to the first side surface 203 of each cell 202 in a first to a Qth cell 202. A second reinforcing member 300 is fixedly bonded to the first side surface 203 of each cell 202 in the Qth to a (2Q-1)th cell 202. A third reinforcing member 300 is fixedly bonded to the first side surface 203 of each cell 202 in the (2Q-1)th to a (3Q-2)th cell 202. Similarly, an Mth reinforcing member 300 is fixedly bonded to the first side surface 203 of each cell 202 in a [M x Q-(M-1)-(Q-1)]th to a [M x Q-(M-1)]th cell 202.

The preset direction may be parallel to the first direction, or at a certain angle with respect to the first direction.

As shown in FIG. 2, the battery unit 201 includes four cells 202, and three reinforcing members 300 are arranged at one side of the battery assembly 200. Each reinforcing member 300 is fixedly bonded to the first side surface 203 of each cell 202 in two adjacent cells 202. A first reinforcing member 300 is fixedly bonded to the first side surface 203 of each cell 202 in a first to a second cell 202, a second reinforcing member 300 is fixedly bonded to the first side surface 203 of each cell 202 in the second to a third cell 202, and a third reinforcing member 300 is fixedly bonded to the first side surface 203 of each cell 202 in the third to a fourth cell 202.

As shown in FIG. 8, the battery unit 201 includes five cells 202, and two reinforcing members 300 are arranged at one side of the battery assembly 200. Each reinforcing member 300 is fixedly bonded to the first side surface 203 of each cell 202 in three adjacent cells 202. A first reinforcing member 300 is fixedly bonded to the first side surface 203 of each cell 202 in a first to a third cell 202, and a second reinforcing member 300 is fixedly bonded to the first side surface 203 of each cell 202 in the third to a fifth cell 202.

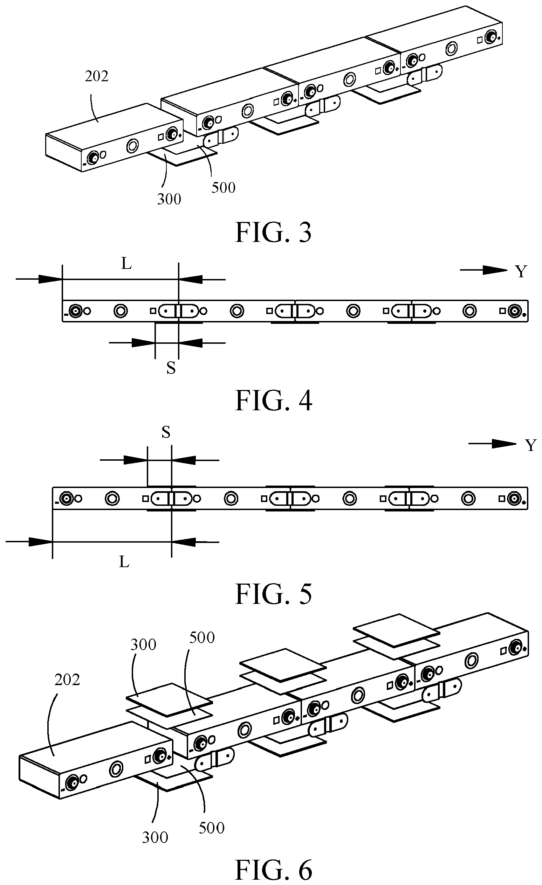

In an embodiment, as shown in FIG. 6 and FIG. 7, the side surfaces include two opposite first side surfaces 203, and the M reinforcing members 300 are provided at two sides of the battery assembly 200. The reinforcing member 300 arranged at one side of the battery assembly 200 is fixedly bonded to one first side surface 203 of each cell 202 in Q adjacent cells 202, and the reinforcing member 300 arranged at the other side of the battery assembly 200 is fixedly bonded to the other first side surface 203 of each cell 202 in Q adjacent cells 202, to further improve the strength of the battery unit 201. The number of Q is not specifically limited, and may be two, three or more.

It should be noted that the reinforcing member 300 arranged at one side of the battery assembly 200 is fixedly bonded to one first side surface 203 of each cell 202 in Q adjacent cells 202. Appreciately, the reinforcing member 300 is fixedly bonded to the whole or part of the first side surface 203 of each cell 202 in Q adjacent cells 202. Similarly, the reinforcing member 300 arranged at the other side of the battery assembly 200 is fixedly bonded to the other first side surface 203 of each cell 202 in Q adjacent cells 202. It can be understood that the reinforcing member 300 is fixedly bonded to the whole or part of the other first side surface 203 of each cell 202 in Q adjacent cells 202.

In an embodiment, the reinforcing member 300 arranged at one side of the battery assembly 200 is fixedly bonded to at least part of one first side surface 203 of each cell 202 in Q adjacent cells 202, and the reinforcing member 300 arranged at the other side of the battery assembly 200 is fixedly bonded to at least part of the other first side surface 203 of each cell 202 in Q adjacent cells 202.

As shown in FIG. 6, the reinforcing member 300 arranged at one side of the battery assembly 200 is fixedly bonded to at least part of one first side surface 203 of each cell 202 in two adjacent cells 202, and the reinforcing member 300 arranged at the other side of the battery assembly 200 is fixedly bonded to at least part of the other first side surface 203 of each cell 202 in two adjacent cells 202.

However, in another embodiment, as shown in FIG. 9, the reinforcing member 300 arranged at one side of the battery assembly 200 is fixedly bonded to at least part of one first side surface 203 of each cell 202 in three adjacent cells 202, and the reinforcing member 300 arranged at the other side of the battery assembly 200 is fixedly bonded to at least part of the other first side surface 203 of each cell 202 in three adjacent cells 202.

As shown in FIG. 5, FIG. 6 and FIG. 9, the reinforcing members 300 arranged at both sides of the battery assembly 200 are arranged in sequence along a preset direction. A first reinforcing member 300 arranged at one side of the battery assembly 200 is fixedly bonded to one first side surface 203 of each cell 202 in a first to a Qth cell 202, a second reinforcing member 300 is fixedly bonded to the one first side surface 203 of each cell 202 in the Qth to a (2Q-1)th cell 202, and similarly, an Mth reinforcing member 300 is fixedly bonded to the one first side surface 203 of each cell 202 in a [M x Q-(M-1)-(Q-1)]th to a [M x Q-(M-1)]th cell 202.

A first reinforcing member 300 arranged at the other side of the battery assembly 200 is fixedly bonded to the other first side surface 203 of each cell 202 in the first to be Qth cell 202, a second reinforcing member 300 is fixedly bonded to the other first side surface 203 of each cell 202 in the Qth to the (2Q-1)th cell 202, and similarly, an Mth reinforcing member 300 is fixedly bonded to the other first side surface 203 of each cell 202 in the [M x Q-(M-1)-(Q-1)]th to the [M x Q-(M-1)]th cell 202.

In this embodiment, as shown in FIG. 5 and FIG. 6, the battery unit 201 includes four cells 202. Three reinforcing members 300 are arranged at one side of the battery assembly 200. Each reinforcing member 300 is fixedly bonded to one first side surface 203 of each cell 202 in two adjacent cells 202. Three reinforcing members 300 are arranged at the other side of the battery assembly 200. Each reinforcing member 300 is fixedly bonded to the other first side surface 203 of each cell 202 in two adjacent cells 202. A first reinforcing member 300 arranged at one side of the battery assembly 200 is fixedly bonded to one first side surface 203 of each cell 202 in a first to a second cell 202, a second reinforcing member 300 is fixedly bonded to the one first side surface 203 of each cell 202 in the second to a third cell 202, and a third reinforcing member 300 is fixedly bonded to the one first side surface 203 of each cell 202 in the third to a fourth cell 202. A first reinforcing member 300 arranged at the other side of the battery assembly 200 is fixedly bonded to the other first side surface 203 of each cell 202 in the first to the second cell 202, a second reinforcing member 300 is fixedly bonded to the other first side surface 203 of each cell 202 in the second to the third cell 202, and a third reinforcing member 300 is fixedly bonded to the other first side surface 203 of each cell 202 in the third to the fourth cell 202.

However, in another embodiment, as shown in FIG. 9, the battery unit 201 includes five cells 202. Two reinforcing members 300 are arranged at one side of the battery assembly 200. Each reinforcing member 300 is fixedly bonded to one first side surface 203 of each cell 202 in three adjacent cells 202. Two reinforcing members 300 are arranged at the other side of the battery assembly 200. Each reinforcing member 300 is fixedly bonded to the other first side surface 203 of each cell 202 in three adjacent cells 202. A first reinforcing member 300 arranged at one side of the battery assembly 200 is fixedly bonded to one first side surface 203 of each cell 202 in a first to a third cell 202, and a second reinforcing member 300 is fixedly bonded to the one first side surface 203 of each cell 202 in the third to a fifth cell 202. A first reinforcing member 300 arranged at the other side of the battery assembly 200 is fixedly bonded to the other first side surface 203 of each cell 202 in the first to the third cell 202, and a second reinforcing member 300 is fixedly bonded to the other first side surface 203 of each cell 202 in the third to the fifth cell 202.

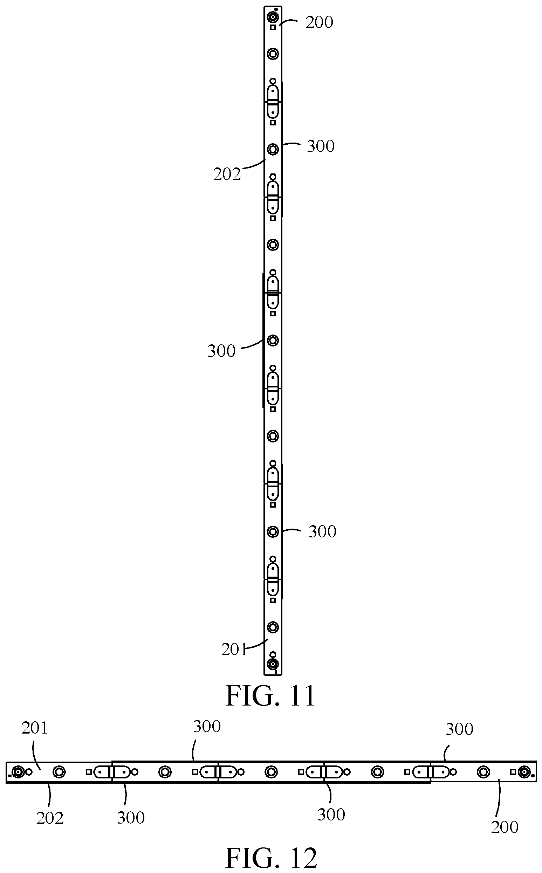

As shown in FIG. 10 and FIG. 11, the reinforcing members 300 arranged at both sides of the battery assembly 200 are arranged in sequence along a preset direction. A first reinforcing member 300 arranged at one side of the battery assembly 200 is fixedly bonded to one first side surface 203 of each cell 202 in a first to a Qth cell 202, a first reinforcing member 300 arranged at the other side of the battery assembly 200 is fixedly bonded to the other first side surface 203 of each cell 202 in the Qth to a (2Q-1)th cell 202, and a second reinforcing member 300 arranged at the one side of the battery assembly 200 is fixedly bonded to the one first side surface 203 of each cell 202 in the (2Q-1) to a (3Q-2)th cell 202, a second reinforcing member 300 arranged at the other side of the battery assembly 200 is fixedly bonded to the other first side surface 203 of each cell 202 in the (3Q-2)th to a (4Q-3)th cell 202, similarly, an Mth reinforcing member 300 arranged at the one side of the battery assembly 200 is fixedly bonded to the one first side surface 203 of each cell 202 in a [2 x M x Q-(2M-1)-2(Q-1)] th to a [2 x M x Q-(2M-1)-(Q-1)]th cell 202, and an Mth reinforcing member 300 arranged at the other side of the battery assembly 200 is fixedly bonded to the other first side surface 203 of each cell 202 in the [2 x M x Q-(2M-1)-(Q-1)]th to a [2 x M x Q-(2M-1)]th cell 202.

In this embodiment, as shown in FIG. 10, the battery unit 201 includes five cells 202. Two reinforcing members 300 are arranged at one side of the battery assembly 200. Each reinforcing member 300 is fixedly bonded to one first side surface 203 of each cell 202 in two adjacent cells 202. Two reinforcing members 300 are arranged at the other side of the battery assembly 200. Each reinforcing member 300 is fixedly bonded to the other first side surface 203 of each cell 202 in two adjacent cells 202. A first reinforcing member 300 arranged at one side of the battery assembly 200 is fixedly bonded to one first side surface 203 of each cell 202 in a first to a second cell 202, and a first reinforcing member 300 arranged at the other side of the battery assembly 200 is fixedly bonded to the other first side surface 203 of each cell 202 in the second to a third cell 202. A second reinforcing member 300 arranged at the one side of the battery assembly 200 is fixedly bonded to the one first side surface 203 of each cell 202 in the third to a fourth cell 202, and a second reinforcing member 300 arranged at the other side of the battery assembly 200 is fixedly bonded to the other first side surface 203 of each cell 202 in the fourth to a fifth cell 202.

However, in another embodiment, as shown in FIG. 11, the battery unit 201 includes seven cells 202. Two reinforcing members 300 are arranged at one side of the battery assembly 200. Each reinforcing member 300 is fixedly bonded to one first side surface 203 of each cell 202 in three adjacent cells 202. One reinforcing member 300 is arranged at the other side of the battery assembly 200, and the reinforcing member 300 is fixedly bonded to the other first side surface 203 of each cell 202 in three adjacent cells 202. A first reinforcing member 300 arranged at one side of the battery assembly 200 is fixedly bonded to one first side surface 203 of each cell 202 in a first to a third cell 202, and a first reinforcing member 300 arranged at the other side of the battery assembly 200 is fixedly bonded to the other first side surface 203 of each cell 202 in the third to a fifth cell 202. A second reinforcing member 300 arranged at the one side of the battery assembly 200 is fixedly bonded to the one first side surface 203 of each cell 202 in the fifth to a seventh cell 202.

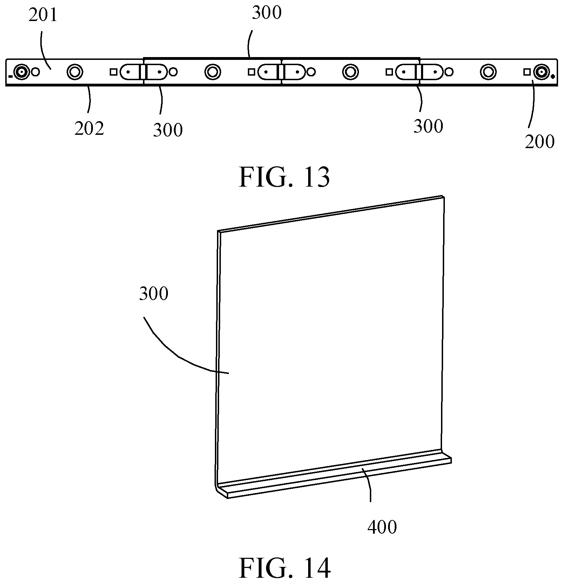

As shown in FIG. 12 and FIG. 13, the reinforcing members 300 arranged at both sides of the battery assembly 200 are arranged in sequence along a preset direction. A first reinforcing member 300 arranged at one side of the battery assembly 200 is fixedly bonded to one first side surface 203 of each cell 202 in a first to a Qth cell 202. A second reinforcing member 300 is fixedly bonded to the one first side surface 203 of each cell 202 in a (Q+1)th to a (2Q)th cell 202. Similarly, an Mth reinforcing member 300 is fixedly bonded to the one first side surface 203 of each cell 202 in a [M x Q -(Q-1)]th to a [M x Q)]th cell 202.

A first reinforcing member 300 arranged at the other side of the battery assembly 200 is fixedly bonded to the other first side surface 203 of each cell 202 in a second to a (Q+1) cell 202, a second reinforcing member 300 is fixedly bonded to the other first side surface 203 of each cell 202 in a (Q+2)th to a (2Q+1)th cell 202, and similarly, an Mth reinforcing member 300 is fixedly bonded to the other first side surface 203 of each cell 202 in a [M x Q -(Q-1)+1]th to a [M x Q+1]th cell 202.

In this embodiment, as shown in FIG. 12, the battery unit 201 includes five cells 202. Two reinforcing members 300 are arranged at one side of the battery assembly 200. Each reinforcing member 300 is fixedly bonded to one first side surface 203 of each cell 202 in two adjacent cells 202. Two reinforcing members 300 are arranged at the other side of the battery assembly 200. Each reinforcing member 300 is fixedly bonded to the other first side surface 203 of each cell 202 in two adjacent cells 202. A first reinforcing member 300 arranged at one side of the battery assembly 200 is fixedly bonded to one first side surface 203 of each cell 202 in a first to a second cell 202, and a second reinforcing member 300 is fixedly bonded to the one first side surface 203 of each cell 202 in a third to a fourth cell 202. A first reinforcing member 300 arranged at the other side of the battery assembly 200 is fixedly bonded to the other first side surface 203 of each cell 202 in the second to a third cell 202, and a second reinforcing member 300 is fixedly bonded to the other first side surface 203 of each cell 202 in the fourth to a fifth cell 202.

However, in another embodiment, as shown in FIG. 13, the battery unit 201 includes four cells 202. Two reinforcing members 300 are arranged at one side of the battery assembly 200. Each reinforcing member 300 is fixedly bonded to one first side surface 203 of each cell 202 in two adjacent cells 202. One reinforcing member 300 is arranged at the other side of the battery assembly 200, and the reinforcing member 300 is fixedly bonded to the first side surface 203 of each cell 202 in two adjacent cells 202. A first reinforcing member 300 arranged at one side of the battery assembly 200 is fixedly bonded to one first side surface 203 of each cell 202 in a first to a second cell 202, and a second reinforcing member 300 is fixedly bonded to the one first side surface 203 of each cell 202 in a third to a fourth cell 202. A first reinforcing member 300 arranged at the other side of the battery assembly 200 is fixedly bonded to the other first side surface 203 of each cell 202 in the second to a third cell 202.

In an embodiment, as shown in FIG. 2 and FIG. 14, one end of the reinforcing member 300 is provided with an extension 400 attached to the top surface 205 or the bottom surface 206 of each of the cells 202, to further improve the strength of the battery unit 201. For example, the extension 400 may be attached to the top surface 205 or the bottom surface 206 of one cell 202, or to the top surface 205 or the bottom surface 206 of one cell 202.

In this embodiment, the reinforcing member 300 and the extension 400 are integrally formed. Certainly, the reinforcing member 300 and the extension 400 can also be formed separately, and then connected.

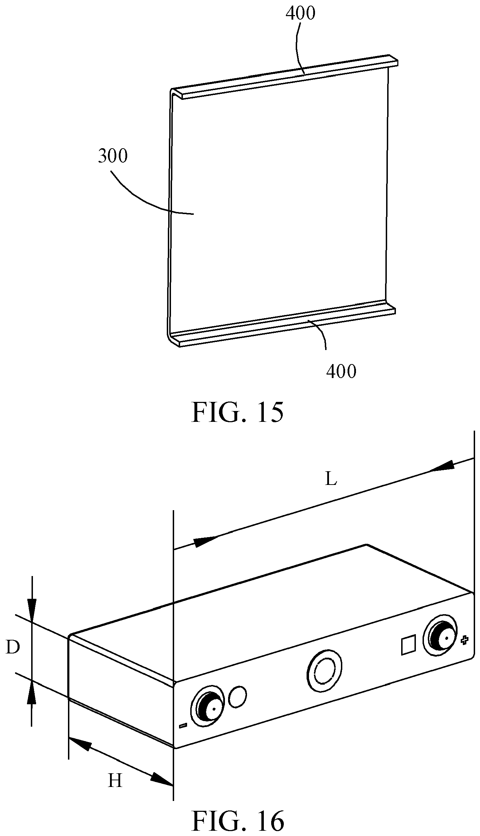

In an embodiment, as shown in FIG. 2 and FIG. 15, two opposite ends of the reinforcing member 300 are each provided with extensions 400, one of the extensions is attached to the top surface 205 of each of the cells 202, and another of the extensions is attached to the bottom surface 206 of each of the cells 202, to further improve the strength of the battery unit 201. For example, one extension 400 is attached to the top surface 205 of one cell 202, and the other extension 400 is attached to the bottom surface 206 of one 202. Alternatively, one extension 400 is attached to the top surfaces 205 of two cells 202, and the other extension 400 is attached to the bottom surfaces 206 of two cells 202.

In an embodiment, as shown in FIG. 1 and FIG. 2, the casing 100 has an X direction, a Y direction and a Z direction perpendicular to one another. A number of battery assemblies 200 are provided, and the number of battery assemblies 200 are arranged in the casing 100 along the X direction. The N cells 202 are arranged in sequence along the Y direction, and the top surface 205 and the bottom surface 206 of the cell are arranged opposite to each other in the Z direction. The first direction is parallel to the Y direction, and the second direction is parallel to the X direction.

In an embodiment, as shown in FIG. 2, FIG. 16 and FIG. 17, the cell 202 is roughly a cuboid, having a length L, a width H and a thickness D. The length L of the cell 202 is greater than or equal to the width H, and the width H of the cell 202 is greater than the thickness D. The X direction is the thickness direction of the cell 202, the Y direction is one of the length direction and the width direction of the cell 202, and the Z direction is the other of the length direction and the width direction of the cell 202. The dimension of the cell 202 along the second direction is the thickness of the cell 202, that is, D1=D.

It should be noted that the cell 202 being roughly a cuboid herein can be understood as the cell 202 having a cuboid shape, a cube shape, a roughly cuboid shape or cube shape that is locally irregular, or a generally approximate cuboid shape or cube shape that locally has a notch, a bulge, a chamfer, an arc, or a curve.

The cell 202 includes six surfaces, including the bottom surface 206, the top surface 205, two first side surfaces 203 and two second side surfaces 204. The two first side surfaces 203 are arranged opposite in the thickness direction, the two second side surfaces 204 are arranged opposite in the length direction, and the bottom surface 206 and the top surface 205 are arranged opposite in the width direction.

The casing 100 includes a first side frame 102 and a second side frame 102 arranged opposite to each other along the Y direction 103. The battery assembly 200 is provided between the first side frame 102 and the second side frame 103. One end of the battery assembly 200 is supported by the first side frame 102, and the other end of the battery assembly 200 is supported by the second side frame 103. That is, the battery assembly 200 extends from the first side frame 102 to the second side frame 103 along the Y direction. In other words, the battery assembly 200 extends from one side to the other side of the casing 100 along the Y direction, and one battery assembly 200 is provided in the casing 100 along the Y direction.

The cells 202 are connected into one piece by the reinforcing members 300 fixedly bonded to the first side surface 203 of the cells 202. The overall strength of the battery assembly 200 can be improved by the reinforcement and support of the reinforcing members 300. The battery assembly 200 can serve as a reinforcing beam in the casing 100, thus greatly simplifying the structure of the casing, reducing the space occupied by the reinforcing rib, and improving the space utilization of the battery pack 10 and the energy density of the battery pack 10. Moreover, the battery assemblies 200 are directly arranged and aligned in the casing 100, and such a structure design omits the structural members for mounting and fixing the cells 202, which not only reduces the weight of the entire battery pack 10, but also simplifies the assembly process, thus reducing the production cost.

In this embodiment, one end of the battery assembly 200 can be directly or indirectly supported by the first side frame 102, and the other end of the battery assembly 200 can be directly or indirectly supported by the second side frame 103. "Directly" means that one end of the battery assembly 200 is supported by directly contacting the first side frame 102, and the other end of the battery assembly 200 is supported by directly contacting the second side frame 10. "Indirectly" means that for example, in some embodiments, one end of the battery assembly 200 is supported by mating with the first side frame 102 through an interposed member, and the other end of the battery assembly 200 is supported by mating with the second side frame 103 through an interposed member. Further, both ends of the battery assembly 200 may also be fixed to the first side frame 102 and the second side frame 103. The specific fixing means is described in detail below, and the support and fixing means are not particularly limited in the present disclosure.

Within the technical concept of the present disclosure, in an embodiment, the distance between the first side frame 102 and the second side frame 103 fits the dimension of the battery assembly 200 in the Y direction. The fits herein means that the distance between the two frames can be adapted to mount a battery assembly 200. This fit can be clearance fit, interference fit, tight fit, fixed fit and others, to achieve the objects of the present disclosure.

Further, the casing 100 also includes a third side frame 104 and a fourth side frame 105 arranged opposite to each other along the X direction, where a number of battery assemblies 200 are arranged side by side between the third side frame 104 and the fourth side frame 105 along the X direction.

The casing 100 includes a tray 101 and an upper cover. An accommodating space where the battery assemblies 200 are arranged is defined by the tray 101 and the upper cover. The top surfaces of the cells 202 in the battery assembly 200 are fixedly bonded to an inner surface of the upper cover, and the bottom surfaces of the cells 202 are fixedly bonded to an inner surface of the tray 101. In this way, the battery assemblies 200 can form an integral structure with the upper cover and the tray 101. The integral structure has high a mechanical strength, that is, battery pack 10 has a high structural strength, so that it can well withstand the impact of an external force. During use, due to its sufficient structural strength, the battery pack 10 can constitute part of the structural strength of the vehicle. In other words, contrary to existing design ideas, the battery pack 10 can be used to increase the structural strength of the vehicle, with no need to design additional structural members to protect the battery pack 10 on the vehicle. Such a design can simplify or even cancel a designed structure of the vehicle frame for protecting the structural strength of the battery pack 10. This is conducive to the realization of the design requirement for lightweight of the vehicle, reduces the vehicle design and manufacturing costs and improve the vehicle production efficiency.

It should be noted that the inner surface of the upper cover refers to a surface of the upper cover at a side close to the cells 202, and the inner surface of the tray 101 refers to a surface of the tray 101 at a side close to the cells 202. In addition, the top surfaces of the cells 202 in the battery assembly 200 may be directly or indirectly fixedly bonded to the inner surface of the upper cover. For example, the top surfaces of the cells 202 in the battery assembly 200 are fixedly bonded to one side of a connecting board, and the other side of the connecting board is fixedly bonded to the inner surface of the upper cover. Similarly, the bottom surfaces of the cells 202 in the battery assembly 200 may be directly or indirectly fixedly bonded to the inner surface of the tray 101. For example, the bottom surfaces of the cells 202 in the battery assembly 200 are fixedly bonded to one side of a connecting board, and the other side of the connecting board is fixedly bonded to the inner surface of the tray 101.

In this embodiment, the tray 101 includes the first side frame 102 and the second side frame 103 arranged opposite to each other along the Y direction 103, and directions the third side frame 104 and the fourth side frame 105 arranged opposite to each other along the X direction.

In an embodiment, the first side frame 102 and the second side frame 103 are perpendicular and connected to the third side frame 104 and the fourth side frame 105, so that the casing 100 is formed to have a rectangle or square shape. In other embodiments, the first side frame 102 and the second side frame 103 may be parallel to each other, and the third side frame 104 and the fourth side frame 105 may be arranged at an angle with respect to the first side frame 102 and the second side frame 103, so that the casing 100 is formed to have a trapezoid or parallelogram shape. In the present disclosure, the specific shape of the casing 100 formed by the first side frame 102, the second side frame 103, the third side frame 104, and the fourth side frame 105 is not limited.

In some embodiments of the present disclosure, the third side frame 104 applies a force toward the fourth side frame 105 to the battery assembly 200 arranged adjacent to the third side frame 104, and the fourth side frame 105 applies a force toward the third side frame 104 to the battery assembly 200 arranged adjacent to the fourth side frame 105, such that a number of battery assemblies 200 are tightly arranged between the third side frame 104 and the fourth side frame 105 along the X direction, and the battery assemblies 200 can closely fit one another. Moreover, the third side frame 104 and the fourth side frame 105 can limit the number of battery assemblies 200 in the X direction, and buffer and provide an inward pressure to the battery assembly 200, especially when the battery assembly 200 expands slightly, to avoid excessive expansion and deformation of the battery assembly 200.

To further improve the structural strength of the battery pack 10, the upper cover is of a multi-layer composite structure. The multi-layer composite structure includes two layers of aluminum plates, and a steel plate sandwiched between the two layers of aluminum plates. Alternatively, the multi-layer composite structure includes two layers of aluminum plates, and a foamed aluminum plate sandwiched between the two layers of aluminum plates. Alternatively, the multi-layer composite structure includes two fiber composite layers, and a foamed material layer sandwiched between the two fiber composite layers. The fiber composite layer includes a glass fiber layer and/or a carbon fiber layer.

To further improve the structural strength of the battery pack 10, the tray 101 is also of a multi-layer composite structure. The multi-layer composite structure includes two layers of aluminum plates, and a steel plate sandwiched between the two layers of aluminum plates. Alternatively, the multi-layer composite structure includes two layers of aluminum plates, and a foamed aluminum plate sandwiched between the two layers of aluminum plates. Alternatively, the multi-layer composite structure includes two fiber composite layers, and a foamed material layer sandwiched between the two fiber composite layers. The fiber composite layer includes a glass fiber layer and/or a carbon fiber layer.

In an embodiment, the reinforcing member 300 is a reinforcing plate, and the dimension of the reinforcing member 300 in the second direction is the thickness of the reinforcing plate. It should be noted that the reinforcing member 300 is also not limited to the plate-like structure, and it may also have other shapes. A reinforcing rib can also be provided on the plate-like structure, to further increase the strength.

Further, the reinforcing plate is a steel plate, an aluminum plate or a glass fiber plate.

In an embodiment, as shown in FIG. 2 and FIG. 3, the reinforcing member 300 is fixedly bonded by a structural adhesive 500 to the first side surface 203 of each cell 202 in Q adjacent cells 202, where the number of Q is not specifically limited, for example, three or four.

Further, the structural adhesive 500 is a thermally conductive structural adhesive 500. The thermally conductive structural adhesive 500 can not only ensure a good bonding effect between the reinforcing member 300 and the first side surface 203 of the cell 202, but also conduct the heat generated by the cell 202 during operation.

As shown in FIG. 2 to FIG. 4, an S is defined as a projecting length of the reinforcing member 300 bonded to the first side surface 203 of at least one of the cells 202 onto the first side surface 203 of the cells 202 in the first direction, and P is defined as a length of the cell 202 in the first direction; and the S and the P meet: S=0.1P-0.5P. Such a setting can ensure a good bonding effect between the reinforcing member 300 and the first side surface 203 of the cell 202, and also ensure a distance W between two adjacent reinforcing members 300, where the distance W can be used to buffer the expansion of the cell 202 during operation. Therefore, there is no need to reserve a gap between adjacent battery assemblies 200, which improves the space utilization of the battery pack 10.

The first direction is parallel to the Y direction. and the length P of the cell 202 along the first direction is the length L of the cell 202.

In this embodiment, the battery unit 201 includes four cells 202, and the projection of the reinforcing member 300 on the first side surface 203 of each cell 202 has a length S in the first direction. Certainly, the projection on the first side surface 203 of only one cell 202 or two cells 202 has a length S in the first direction according to actual needs.

In an embodiment, a gap is provided between two adjacent battery assemblies 200, where the gap is used to accommodate the expansion of the cell 202 during operation. In addition, the gap can also serve as a cooling air duct, or a liquid cooling plate is provided in the gap, to cool and dissipate the cell 202.

In an embodiment, the battery units 201 are connected in series, in parallel, or in parallel and series, and the cells 202 in the battery unit 201 are connected in series, in parallel, or in parallel and series, to meet the actual needs during use.

In an embodiment, as shown in FIG. 1 and FIG. 2, the battery pack 10 also includes a power connector 600, and the cells 202 in the battery unit 201 are connected in series, or in parallel by the power connector 600.

Further, an electrode terminal 207 of the cell 202 is provided on the top surface 205 of the cell 202, to facilitate the arrangement of the battery assembly 200 in the casing 100. The cell 202 has two electrode terminals 207, one of which is a positive terminal, and the other of which is a negative terminal.

In an embodiment, a number of battery assemblies 200 are provided, and a reinforcing member is provided between at least two adjacent battery assemblies 200. Such a setting can further improve the strength of the battery assembly 200 by the reinforcing member, thereby improving the structural strength of the battery pack 10. The number of the battery assemblies 200 can be set according to actual needs, for example, two, three or four. For example, three battery assemblies 200 are provided, and a reinforcing member is arranged between the first battery assembly 200 and the second battery assembly 200 along the arrangement direction of the battery assemblies 200. Alternatively, a reinforcing member is arranged between the second battery assembly 200 and the third battery assembly 200 along the arrangement direction of the battery assemblies 200. Alternatively, a reinforcing member is arranged between the first battery assembly 200 and the second battery assembly 200, and a reinforcing member is between the second battery assembly 200 and the third battery assembly 200. Further, the reinforcing member is fixedly bonded to the battery assemblies 200 arranged at both sides of the reinforcing member. A structural adhesive is fixedly bonded to two sides of the reinforcing member. The structural adhesive can not only ensure a good bonding strength between the two, and also have the function of heat conduction.

Further, the reinforcing member is a reinforcing plate having a solid structure. for example, a solid aluminum or steel plate.

In an embodiment, a number of battery assemblies 200 are provided, and two adjacent cells 202 in one battery assembly 200 are set at a first interval, and two adjacent cells 202 in another adjacent battery assembly 200 are set at a second interval, where the projection of the first interval in the first direction does not overlap with the projection of the second interval in the first direction, and the size of the first interval and the size of the second interval can be the same or different. This arrangement allows a position with relatively weak structural strength in one battery assembly (that is, a position in the first interval) and a position with relatively weak structural strength in another adjacent battery assembly (that is, a position in the second interval) to be staggered from each other. In this way, the position with relatively weak structural strength in one battery assembly can be equilibrated by another adjacent battery assembly, thus improving the overall strength of the battery pack.

For example, a first cell 202 and a second cell 202 arranged in the first direction in one battery assembly 200 are arranged at a first interval, and a first cell 202 and a second cell 202 arranged in the first direction in another battery assembly 200 adjacent to the battery assembly 200 are arranged at a second interval. The projection of the first interval in the first direction does not overlap with the projection of the second interval in the first direction. Alternatively, a second cell 202 and a third cell 202 arranged in the first direction in one battery assembly 200 are arranged at a first interval, and a second cell 202 and a third cell 202 arranged in the first direction in another battery assembly 200 adjacent to the battery assembly 200 are arranged at a second interval. The projection of the first interval in the first direction does not overlap with the projection of the second interval in the first direction.

In some embodiments, as shown in FIG. 2, FIG. 18 and FIG. 19, a number of battery assemblies 200 are provided, and the second side surfaces 204 of two adjacent cells 202 in one battery assembly 200 are attached to each other at a position designated as a first position, and the second side surfaces 204 of two adjacent cells 202 in another adjacent battery assembly 200 are attached to each other at a position designated as a second position. The first position and the second position are arranged at an interval along the first direction. It can be understood that this arrangement allows positions with relatively weak structural strength in two adjacent battery assemblies 200 to be staggered from each other, that is, the first position and the second position are staggered from each other, thus improving the overall strength of the battery pack. Moreover, the second side surfaces 204 of two adjacent cells 202 in the battery assembly 200 are attached to each other, so that the space occupied by the battery pack 10 is reduced, thereby improving the space utilization of the battery pack 10.

For example, the second side surface 204 of a first cell 202 is attached to the second side surface 204 of a second cell 202 arranged in the first direction in one battery assembly 200, at a position designated as a first position, and the second side surface 204 of a first cell 202 is attached to the second side surface 204 of a second cell 202 arranged in the first direction in another battery assembly 200 adjacent to the battery assembly 200 at a position designated as a second position. The first position and the second position are arranged at an interval along the first direction. Alternatively, the second side surface 204 of a second cell 202 is attached to the second side surface 204 of a third cell 202 arranged in the first direction in one battery assembly 200 at a position designated as a first position, and the second side surface 204 of a second cell 202 is attached to the second side surface 204 of a third cell 202 arranged in the first direction in another battery assembly 200 adjacent to the battery assembly 200 at a position designated as a second position. The first position and the second position are arranged at an interval along the first direction.

Further, a number of cells 202 varies in two adjacent battery assemblies 200, one of the battery assemblies 200 is designated as a first battery assembly, and the other battery assembly 200 is designated as a second battery assembly. The number of cells 202 in the first battery assembly is greater than the number of cells 202 in the second battery assembly, a reinforcing block 700 is provided in the second battery assembly 700, and the reinforcing block 700 is connected to the cells 202 in the second battery assembly. It can be understood that after the cells 202 in two adjacent battery assemblies 200 are arranged as described above, the battery unit 201 will form a vacancy at a position in the second battery assembly. The reinforcing block 700 is arranged at the vacant position at this time, and the reinforcing block 700 is connected to the cells 202. This can further improve the strength of the battery assembly 200, and improve the overall strength of the battery pack 10. For example, a vacancy is formed at one or both ends of the battery unit in the second battery assembly along the first direction, or a vacancy is formed in the middle of the battery unit of the second battery assembly. At this time, a reinforcing block is arranged at the vacant position. The reinforcing block may be fixedly bonded to the second side surfaces of the cells, the reinforcing block is fixedly bonded to the reinforcing members, or the reinforcing block is fixedly bonded to the first side surfaces of the cells.

For example, the number of cells 202 in the first battery assembly is four, the number of cells 202 in the second battery assembly is three, and a reinforcing block is arranged at one or both ends of the battery unit 201 in the second battery assembly along the first direction. Alternatively, the number of cells 202 in first battery assembly is three, the number of cells 202 in the second battery assembly is two, and a reinforcing block is arranged at one or both ends of the battery unit 201 in the second battery assembly along the first direction.

Further, the dimension of the first battery assembly along the first direction is the same as the dimension of the second battery assembly along the first direction, and the first battery assembly and the second battery assembly are alternately arranged in the casing 100 in the X direction. Such a setting can facilitates the arrangement of the battery assembly 200 in the casing 100, and improves the space utilization of the battery pack 10.

In the above embodiments, a structural adhesive is used to bond the cells 202, and bond the cells 202 to the casing 100, by preferably gluing, to allow the interior of the battery pack 10 to be firmly formed as a whole. This promotes the improvement of the overall strength of the battery pack.

Moreover, the present disclosure also provides an electric vehicle, which includes a battery pack 10 having a high structural strength as described above. The battery pack 10 of such a structure is arranged at the bottom of a vehicle, which can well support the structural strength of the vehicle and reduce the strength design of the vehicle, thus reducing the design cost, difficulty and period of the vehicle.

### Specific embodiments 1-14:

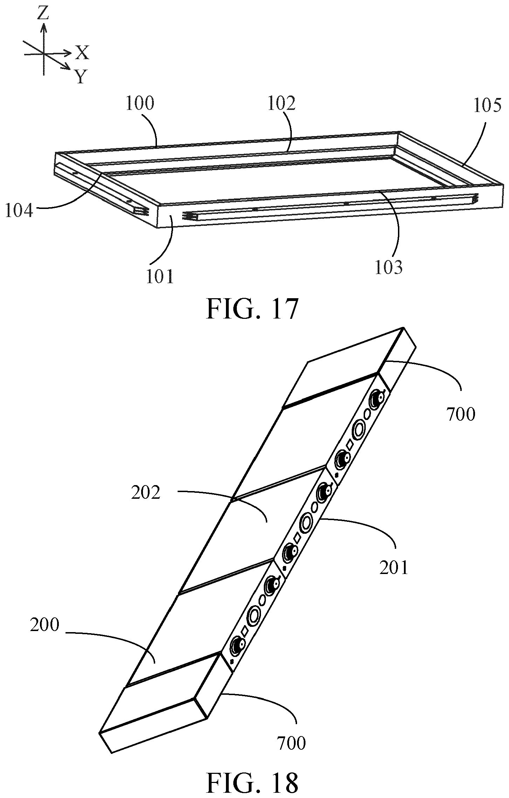

Four cuboid-shaped cells 202 are arranged in the Y direction and connected with three reinforcing members 300, as shown in FIG. 2. Each reinforcing member 300 is connected to two cells 202, and the reinforcing member 300 is arranged at one side of battery assembly 200. The reinforcing member 300 has a flat plate-like shape as shown in FIG. 2. The four cells 202 are assembled into one battery assembly 200. Twelve such battery assemblies 200 are arranged in the tray 101 along the X direction, as shown in FIG. 17. Both ends of each battery assembly 200 are supported by the first side frame 102 and the second side frame 103, and then sealed with the upper cover to form a battery pack. The reinforcing member 300 and cell 202 in each embodiment satisfy Table 1, and the test results according to GB/T 31467.3 - 2015 Lithium-ion traction battery pack and system for Electric vehicles - Part 3: Safety requirements and test methods are shown in Table 1:

**Table 1. Test results of anti-vibration and anti-extrusion performances of battery packs including battery assemblies in Embodiments 1-14**

| D0 (thickness of reinforcing member/mm) | D1 (cell thickness/mm) | G (cell weight/kg) | D0/D1 | D0/G(mm·kg-1) | Test results |
|---|---|---|---|---|---|
| 0.5 | 80 | 2 | 0.00625 | 0.25 | No fire, no explosion |
| 5 | 10 | 1.2 | 0.5 | 4.166666667 | No fire, no explosion |
| 0.6 | 50 | 3.5 | 0.012 | 0.171428 | No fire, no explosion |
| 4 | 10 | 5 | 0.4 | 0.8 | No fire, no explosion |
| 2 | 10 | 2 | 0.2 | 1 | No fire, no explosion |
| 5 | 13 | 1.2 | 0.384615385 | 4.166666667 | No fire, no explosion |
| 2.9 | 29 | 0.5 | 0.1 | 5.8 | No fire, no explosion |
| 2 | 26.5 | 0.9 | 0.075471698 | 2.222222222 | No fire, no explosion |
| 3 | 37 | 2 | 0.081081081 | 1.5 | No fire, no explosion |
| 4 | 44 | 5 | 0.090909091 | 0.8 | No fire, no explosion |
| 1 | 50 | 1.6 | 0.02 | 0.625 | No fire, no explosion |
| 1 | 70 | 4 | 0.014285714 | 0.25 | No fire, no explosion |
| 3.9 | 39 | 0.6 | 0.1 | 6.5 | No fire, no explosion |
| 4.2 | 90 | 2 | 0.0466666 | 2.1 | No fire, no explosion |

### Specific embodiments 15-28:

Four cuboid-shaped cells 202 are arranged in the Y direction and connected by three reinforcing members 300, as shown in Fig. 7. Two reinforcing members 300 are arranged at one side of the battery assembly 200, one reinforcing member 300 is arranged at the other side of the battery assembly 200, and each reinforcing member 300 is connected to two cells 202. The reinforcing member 300 has a flat plate-like shape as shown in FIG. 7. The four cells 202 are assembled into one battery assembly 200. Twelve such battery assemblies 200 are arranged in the tray 101 along the X direction, as shown in FIG. 17. Both ends of each battery assembly 200 are supported by the first side frame 102 and the second side frame 103, and then sealed with the upper cover to form a battery pack. The reinforcing member 300 and cell 202 in each embodiment satisfy Table 2, and the test results according to GB/T 31467.3 - 2015 Lithium-ion traction battery pack and system for Electric vehicles - Part 3: Safety requirements and test methods are shown in Table 2:

**Table 2. Test results of anti-vibration and anti-extrusion performances of battery packs including battery assemblies in Embodiments 15-28**

| D0 (thickness of reinforcing member/mm) | D1 (cell thickness/mm) | G (cell weight/kg) | D0/D1 | D0/G (mm·kg-1) | Test results |
|---|---|---|---|---|---|
| 0.5 | 80 | 2 | 0.00625 | 0.25 | No fire, no explosion |
| 5 | 10 | 1.2 | 0.5 | 4.166666667 | No fire, no explosion |
| 0.6 | 50 | 3.5 | 0.012 | 0.171428 | No fire, no explosion |
| 4 | 10 | 5 | 0.4 | 0.8 | No fire, no explosion |
| 2 | 10 | 2 | 0.2 | 1 | No fire, no explosion |
| 5 | 13 | 1.2 | 0.384615385 | 4.166666667 | No fire, no explosion |
| 2.9 | 29 | 0.5 | 0.1 | 5.8 | No fire, no explosion |
| 2 | 26.5 | 0.9 | 0.075471698 | 2.222222222 | No fire, no explosion |
| 3 | 37 | 2 | 0.081081081 | 1.5 | No fire, no explosion |
| 4 | 44 | 5 | 0.090909091 | 0.8 | No fire, no explosion |
| 1 | 50 | 1.6 | 0.02 | 0.625 | No fire, no explosion |
| 1 | 70 | 4 | 0.014285714 | 0.25 | No fire, no explosion |
| 3.9 | 39 | 0.6 | 0.1 | 6.5 | No fire, no explosion |
| 4.2 | 90 | 2 | 0.0466666 | 2.1 | No fire, no explosion |

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation. Therefore, such terms should not be construed as limiting of the present disclosure.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In description of the present disclosure, "multiple" means at least two, such as two and three unless it is specifically defined otherwise.

In the present disclosure, unless otherwise explicitly specified or defined, the terms such as "mount", "install", "connect", "connection", and "fixed" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components or interaction between two components. A person of ordinary skill in the art may understand the specific meanings of the foregoing terms in the present disclosure according to specific situations.

In the present disclosure, unless explicitly specified or limited otherwise, a first characteristic "on" or "under" a second characteristic may be the first characteristic in direct contact with the second characteristic, or the first characteristic in indirect contact with the second characteristic by using an intermediate medium. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is directly below or obliquely below the second feature, or may merely indicate that the horizontal position of the first feature is lower than that of the second feature.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In this specification, schematic descriptions of the foregoing terms are not necessarily directed at the same embodiment or example. Besides, the specific features, the structures, the materials or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

Although the embodiments of the present disclosure are shown and described above, it may be understood that the foregoing embodiments are exemplary, and cannot be understood as a limitation to the present disclosure. A person of ordinary skill in the art may make changes, modifications, replacements, and variations to the foregoing embodiments without departing from the scope of the present disclosure.

## Claims

1. A battery pack, comprising:
a casing and a battery assembly arranged inside the casing, wherein the casing comprises a bottom surface and a top surface;
the battery assembly comprises a battery unit and a reinforcing member, wherein the battery unit comprises N cells, wherein the N is an integer greater than 2; M reinforcing members are provided; wherein M is an integer greater than 1; at least some of the cells in the battery unit are connected by the M reinforcing members; and one of the reinforcing members is fixedly bonded to a first side surface of at least some cells in Q adjacent cells, wherein the Q is an integer meeting N>Q≥2; and
an outer surface of each of the cells comprises a bottom surface, a top surface, and side surfaces; wherein the bottom surface of the cell faces the bottom surface of the casing, the top surface of the cell faces the top surface of the casing, and the side surfaces comprise the first side surface and two opposite second side surfaces; wherein the first side surface has a largest area among the side surfaces, an area of the first side surface is greater than an area of the bottom surface of the cell and the area of the first side surface is greater than an area of the top surface of the cell; and the N cells are arranged in sequence, wherein the second side surfaces of two adjacent cells are arranged opposite to each other, and the arrangement direction of the cells is a first direction.

2. The battery pack according to claim 1, wherein the reinforcing member has a dimension D0 in a second direction perpendicular to the first direction, and one of the cells connected to the reinforcing member among the Q adjacent cells has a dimension D1 in the second direction, wherein a ratio between D0 and D1 meets: 0.006≤D0/D1≤0.5, and D1 ranges from10 to 90 mm.

3. The battery pack according to claim 2, wherein 0.012≤D0/D1≤0.4.

4. The battery pack according to any one of claims 1 to 3, wherein a number of cells connected to the reinforcing member among the Q adjacent cells is not less than Q/2.

5. The battery pack according to any one of claims 1 to 4, wherein the N cells are connected into a battery unit by the M reinforcing members; and one of the reinforcing members is fixedly bonded to the first side surface of each of the cells in the Q adjacent cells.

6. The battery pack according to any one of claims 1 to 5, wherein a length of the battery assembly along the first direction is 400-2500 mm, and the battery assembly abuts against the bottom surface of the casing to be supported on the bottom surface of the casing.

7. The battery pack according to any one of claims 1 to 6, wherein an S is defined as a projecting length of the reinforcing member bonded to the first side surface of at least one of the cells onto the first side surface of the cells in the first direction; and P is defined as a cell length in the first direction; the S and the P meet: S=0.1P-0.5P.

8. The battery pack according to any one of claims 1 to 7, wherein the M reinforcing members are arranged on one side of the battery assembly, and the M reinforcing members are arranged in sequence along a preset direction, wherein a first reinforcing member is fixedly bonded to the first side surface of each cell in a first to a Qth cell, a second reinforcing member is fixedly bonded to the first side surface of each cell in the Qth to a (2Q-1)th cell, a third reinforcing member is fixedly bonded to the first side surface of each cell in the (2Q-1)th to a (3Q-2)th cell, and an Mth reinforcing member is fixedly bonded to the first side surface of each cell in a [M x Q-(M-1)-(Q-1)]th to a [M x Q-(M-1)]th cell.

9. The battery pack according to any one of claims 1 to 8, wherein one of the reinforcing members is fixedly bonded to the first side surface of two adjacent cells.

10. The battery pack according to any one of claims 1 to 9, wherein the side surfaces comprises two opposite first side surfaces, and the M reinforcing members are distributed on two sides of the battery assembly, wherein the reinforcing member arranged on one side of the battery assembly is fixedly bonded to one first side surface of each cell in Q adjacent cells, and the reinforcing member arranged on the other side of the battery assembly is fixedly bonded to the other first side surface of each cell in Q adjacent cells.

11. The battery pack according to claim 10, wherein the reinforcing member arranged on one side of the battery assembly is fixedly bonded to at least part of one first side surface of each cell in Q adjacent cells, and the reinforcing member arranged on the other side of the battery assembly is fixedly bonded to at least part of the other first side surface of each cell in Q adjacent cells.

12. The battery pack according to claim 10 or 11, wherein the reinforcing members arranged on both sides of the battery assembly are arranged in sequence along a preset direction, wherein a first reinforcing member arranged on one side of the battery assembly is fixedly bonded to one first side surface of each cell in a first to a Qth cell, a second reinforcing member is fixedly bonded to the one first side surface of each cell in the Qth to a (2Q-1)th cell, and an Mth reinforcing member is fixedly bonded to the one first side surface of each cell in a [M x Q-(M-1)-(Q-1)]th to a [M x Q-(M-1)]th cell; and
a first reinforcing member arranged on the other side of the battery assembly is fixedly bonded to the other first side surface of each cell in the first to the Qth cell, a second reinforcing member is fixedly bonded to the other first side surface of each cell in the Qth to the (2Q-1)th cell, and an Mth reinforcing member is fixedly bonded to the other first side surface of each cell in the [M x Q-(M-1)-(Q-1)]th to the [M x Q-(M-1)]th cell.

13. The battery pack according to any one of claims 10 to 12, wherein the reinforcing members arranged on both sides of the battery assembly are arranged in sequence along a preset direction, wherein a first reinforcing member arranged on one side of the battery assembly is fixedly bonded to one first side surface of each cell in a first to a Qth cell, a first reinforcing member arranged on the other side of the battery assembly is fixedly bonded to the other first side surface of each cell in the Q to a (2Q-1)th cell, a second reinforcing member arranged on the one side of the battery assembly is fixedly bonded to the one first side surface of each cell in the (2Q-1) to a (3Q-2)th cell, a second reinforcing member arranged on the other side of the battery assembly is fixedly bonded to the other first side surface of each cell in the (3Q-2)th to a (4Q-3)th cell, an Mth reinforcing member arranged at the one side of the battery assembly is fixedly bonded to the one first side surface of each cell in a [2 x M x Q-(2M-1)-2(Q-1)] th to a [2 x M x Q-(2M-1)-(Q-1)]th cell, and an Mth reinforcing member arranged on the other side of the battery assembly is fixedly bonded to the other first side surface of each cell in the [2× M × Q-(2M-1)-(Q-1)]th to a [2 × M × Q-(2M-1)]th cell.

14. The battery pack according to any one of claims 10 to 13, wherein the reinforcing members on both sides of the battery assembly are arranged in sequence along a preset direction; wherein a first reinforcing member arranged on one side of the battery assembly is fixedly bonded to one first side surface of each cell in a first to a Qth cell, a second reinforcing member is fixedly bonded to the one first side surface of each cell in a (Q-1)th to a (2Q)th cell, and an Mth reinforcing member is fixedly bonded to the one first side surface of each cell in a [MxQ-(Q-1)]th to a (MxQ)th cell; and
a first reinforcing member arranged on the other side of the battery assembly is fixedly bonded to the other first side surface of each cell in a second to a (Q+1)th cell, a second reinforcing member is fixedly bonded to the other first side surface of each cell in a (Q+2)th to a (2Q+1)th cell, and an Mth reinforcing member is fixedly bonded to the other first side surface of each cell in a [MxQ-(Q-1)+1]th to a [MxQ+1)]th cell.

15. The battery pack according to any one of claims 1 to 14, wherein one end of the reinforcing member is provided with an extension attached to the top surface or bottom surface of each of the cells.

16. The battery pack according to any one of claims 1 to 15, wherein two opposite ends of the reinforcing member are each provided with extensions; one of the extensions is attached to the top surface of each of the cells, and an other of the extensions is attached to the bottom surface of each of the cells.

17. The battery pack according to any one of claims 1 to 16, wherein the casing has an X direction, a Y direction and a Z direction perpendicular to one another, wherein a plurality of battery assemblies are provided, and the plurality of battery assemblies are arranged in the casing along the X direction; the N cells are arranged in sequence along the Y direction, the top surface and the bottom surface of the cells are arranged opposite to each other in the Z direction, and the first direction is parallel to the Y direction.

18. The battery pack according to claim 17, wherein the cell is roughly a cuboid, having a length L, a width H and a thickness D, wherein the length L of the cell is greater than or equal to the width H, and the width H of the cell is greater than the thickness D; and wherein the X direction is defined as a thickness direction of the cell, the Y direction is defined as one of a length direction or the width direction of the cell, and the Z direction is defined as the other of the length direction and the width direction of the cell.

19. The battery pack according to claim 17 or 18, wherein the cell comprises six surfaces, comprising a bottom surface, a top surface, two first side surfaces and two second side surfaces; wherein the two first side surfaces are arranged opposite in the thickness direction, the two second side surfaces are arranged opposite in the length direction, and the bottom surface and the top surface are arranged opposite in the width direction.

20. The battery pack according to any one of claims 17 to 19, wherein the casing comprises a first side frame and a second side frame arranged opposite to each other along the Y direction, wherein the battery assembly is provided between the first side frame and the second side frame, one end of the battery assembly is supported by the first side frame, and the other end of the battery assembly is supported by the second side frame.

21. The battery pack according to any one of claims 1 to 20, wherein the reinforcing member is fixedly bonded by a structure adhesive to the first side surface of each cell in Q adjacent cells.

22. The battery pack according to claim 21, wherein the structural adhesive is a thermally conductive structural adhesive.

23. The battery pack according to any one of claims 1 to 22, wherein the reinforcing member is a reinforcing plate.

24. The battery pack according to claim 23, wherein the reinforcing plate is a steel plate, an aluminum plate or a glass fiber plate.

25. The battery pack according to any one of claims 1 to 24, wherein a plurality of battery assemblies are provided, and a gap is provided between two adjacent battery assemblies.

26. The battery pack according to any one of claims 1 to 25, wherein the second side surfaces of two adjacent cells in the battery unit are attached to each other.

27. The battery pack according to any one of claims 1 to 26, wherein a plurality of battery assemblies are provided, and a reinforcing member is provided between at least two adjacent battery assemblies.

28. The battery pack according to claim 27, wherein the reinforcing member is fixedly bonded to the battery assemblies arranged at both sides of the reinforcing member.

29. The battery pack according to claim 28, wherein the reinforcing member is an aluminum plate or a steel plate.

30. The battery pack according to any one of claims 1 to 29, wherein the casing comprises a tray and an upper cover; and an accommodating space where the battery assemblies are arranged is defined by the tray and the upper cover, wherein the top surfaces of the cells in the battery assembly are fixedly bonded to an inner surface of the upper cover, and the bottom surfaces of the cells are fixedly bonded to an inner surface of the tray.

31. The battery pack according to claim 30, wherein the tray and/or the upper cover are/is of a multi-layer composite structure.

32. The battery pack according to claim 31, wherein the multi-layer composite structure comprises two layers of aluminum plates, and a steel plate or a foamed aluminum plate sandwiched between the two layers of aluminum plates.

33. The battery pack according to claim 31 or 32, wherein the multi-layer composite structure comprises two fiber composite layers, and a foamed material layer sandwiched between the two fiber composite layers.

34. The battery pack according to claim 33, wherein the fiber composite layer comprises a glass fiber layer and/ or a carbon fiber layer.

35. The battery pack according to any one of claims 1 to 34, wherein a plurality of battery assemblies are provided; the second side surfaces of two adjacent cells in one battery assembly are attached to each other at a position designated as a first position, and the second side surfaces of two adjacent cells in another adjacent battery assembly are attached to each other at a position designated as a second position, wherein the first position and the second position are arranged at an interval along the first direction.

36. The battery pack according to any one of claims 1 to 35, wherein a plurality of battery assemblies are provided, two adjacent cells in one battery assembly are set at a first interval, and two adjacent cells in another adjacent battery assembly are set at a second interval, wherein the projection of the first interval in the first direction does not overlap with the projection of the second interval in the first direction.

37. The battery pack according to claim 35 or 36, wherein a number of cells varies in two adjacent battery assemblies, one of the battery assemblies is designated as a first battery assembly, and the other battery assembly is designated as a second battery assembly, wherein a number of cells in the first battery assembly is greater than a number of cells in the second battery assembly, a reinforcing block is provided in the second battery assembly, and the reinforcing block is connected to the cells in the second battery assembly.

38. An electric vehicle, comprising a battery pack according to any one of claims 1 to 37.
